# EUROPÄISCHE PATENTSCHRIFT

(11) **EP 3 596 889 B1**
(45) Veröffentlichungstag und Bekanntmachung des Hinweises auf die Patenterteilung: **09.04.2025**
(21) Anmeldenummer: 18710852.7
(22) Anmeldetag: 12.03.2018
(51) Int. Cl.: H04L 12/40, H04W 84/12, H04L 41/0806

(54) **VERFAHREN ZUM AUFBAU EINER DRAHTLOSEN DATENVERBINDUNG**
METHOD FOR ESTABLISHING A WIRELESS DATA LINK
PROCÉDÉ PERMETTANT D'ÉTABLIR UNE LIAISON DE DONNÉES SANS FIL

(30) Priorität: 17.03.2017 DE 102017002633
(43) Veröffentlichungstag der Anmeldung: 22.01.2020
(73) Patentinhaber: ZF CV Systems Europe BV, 1170 Brussels (BE)
(72) Erfinder: HÜBNER, Sören, 26316 Varel (DE); WOLF, Thomas, 30890 Barsinghausen (DE); KÜHNE, Sebastian, 31157 Sarstedt (DE); MEYER-RÖSSLER, Philip, 31135 Hildesheim (DE)
(74) Vertreter: Rabe, Dirk-Heinrich
(86) Internationale Anmeldenummer: PCT/EP2018/056009
(87) Internationale Veröffentlichungsnummer: WO 2018/166940

(56) Entgegenhaltungen:
- DE-A1- 102013 217 684
- US-A1- 2002 030 590
- US-A1- 2008 303 648

## Beschreibung

Die Erfindung betrifft ein Verfahren zum Aufbau einer drahtlosen Datenverbindung zwischen wenigstens zwei Fahrzeugen, welche über eine physische Datenverbindung miteinander verbunden sind. Daneben betrifft die Erfindung ein Steuergerät und ein Kommunikationsgerät.

Moderne Nutzfahrzeuge, insbesondere Zugfahrzeuge, weisen eine Mehrzahl von Steuergeräten auf, zum Beispiel Motor-Steuergerät, Getriebe-Steuergerät und Bremsen-Steuergerät, welche über einen CAN-Bus miteinander kommunizieren können. An den CAN-Bus kann auch ein Steuergerät für die drahtlose Kommunikation angeschlossen sein, entweder zum drahtlosen Übermitteln von den Steuergeräten zur Verfügung stehenden Informationen oder sogar zur drahtlosen Übergabe von Steuerbefehlen an ausgewählte Steuergeräte.

Empfänger und Sender drahtloser Nachrichten kann auch eine Bedienungsperson mit einem entsprechenden Kommunikationsgerät sein. Die drahtlose Verbindung wird in einem üblichen Standard aufgebaut, etwa per Bluetooth oder WLAN. So kann der Fahrer als Bedienungsperson mit seinem Smartphone eine Verbindung zum Fahrzeug aufbauen und Informationen auslesen oder Steuerbefehle übergeben.

In modernen Anhängern sind ebenfalls Steuergeräte vorhanden, zumindest ein Bremsen-Steuergerät für ein elektronisches Bremssystem, welches einer pneumatischen Bremsanlage zugeordnet ist. Das elektronische Bremssystem des Anhängers ist über eine physische Datenverbindung nach ISO 11992 an das elektronische Bremssystem (und den CAN-Bus) des Zugfahrzeugs angeschlossen. Mit dem elektronischen Bremssystem im Anhänger können weitere Subsysteme und Zusatzfunktionen verknüpft sein, etwa eine Luftfederung, eine Rückraumüberwachung usw. Des Weiteren kann mit dem Bremsen-Steuergerät ein Kommunikationsgerät als weiteres Steuergerät verbunden sein. Das Kommunikationsgerät dient der drahtlosen Kommunikation mit dem Zugfahrzeug und/oder einer Bedienungsperson, siehe DE 10 2014 015 394 A1. Auf dieses Dokument wird voll inhaltlich Bezug genommen.

Die US20080303648A1 offenbart eine drahtgebundene Kommunikationseinheit zwischen einem Zugfahrzeug und einem Anhänger, wobei die Identifikation oder Authentifikation zwischen Zugfahrzeug und Anhänger über die drahtgebundene Kommunikationseinheit erfolgt und nach erfolgter Identifikation bzw. Authentifizierung eine zusätzliche drahtlose Kommunikation zwischen Zugfahrzeug und Anhänger zugelassen wird.

Die DE102013217684A1 betrifft ein Verfahren zum Aufbau einer Funkverbindung zum Übertragen von Signalen zwischen einem auf einem Anhänger angeordneten Sender und einem auf einer Zugmaschine angeordneten Empfänger. Das Verfahren umfasst hierbei den Schritt des Übertragens von relevanten Daten zum Aufbau der Funkverbindung über eine die Zugmaschine und den Anhänger verbindende Kabelverbindung. Das Verfahren umfasst weiter den Schritt des Aufbauens der Funkverbindung zwischen dem Sender und dem Empfänger basierend auf den übertragenen Daten.

Die US20020030590A1 offenbart ein Verfahren zum Datenaustausch zwischen einem Zugfahrzeug und einem oder mehreren Anhängern, insbesondere für Nutzfahrzeuge. Dabei funktioniert das Verfahren durch Funkkontakt über in dem Zugfahrzeug und in den Anhängern enthaltene Sende-/Empfangsmodule. Zur Erkennung der Zusammengehörigkeit von Zugfahrzeug und Anhänger sendet das Sende-/Empfangsmodul des Zugfahrzeuges über eine Antenne eine Kennung und ändert gleichzeitig den elektrischen Zustand einer Verbindungsleitung. Falls das im Anhänger befindliche Sende-/Empfangsmodul gleichzeitig mit der empfangenen Kennung die Änderung des elektrischen Zustands der Verbindungsleitung erkennt, wird die empfangene Kennung abgespeichert. Bei späteren Sendungen der Sende-/Empfangsmodule wird die Kennung jeweils vorgeschaltet. Es reagieren dann nur noch diejenigen Sende-/Empfangsmodule, welche die gleiche Kennung aufweisen, also zum gleichen Fahrzeugzug gehören.

Sinnvoll, weil zeitsparend, ist eine automatische Herstellung der drahtlosen Verbindung zwischen Anhänger und Zugfahrzeug. Vermieden werden muss die Herstellung einer drahtlosen Verbindung zwischen zwei Fahrzeugen, die nicht miteinander verbunden werden sollen. Möglich ist dies beispielsweise auf großen Betriebshöfen, auf denen viele Anhänger dicht nebeneinanderstehen. Ein Zugfahrzeug koppelt physisch an einen der Anhänger an. Anschließend oder parallel dazu soll die drahtlose Verbindung zwischen Anhänger und Zugfahrzeug hergestellt werden, nicht jedoch zwischen dem Zugfahrzeug und einem nur in der Nähe stehenden Anhänger. Ebenso soll vermieden werden, dass Zugfahrzeug und angekoppelter Anhänger ein drahtloses Netzwerk bilden und dann ein benachbarter Anhänger eine drahtlose Verbindung mit dem Netzwerk herstellt. Der automatische Aufbau eines drahtlosen Netzwerks zwischen Zugfahrzeug und Anhänger, mit Verifizierung und Autorisierung der Verbindung ist aus der DE 10 2014 015 394 A1 bekannt.

Auf dem CAN-Bus einem Steuergerät zur Verfügung gestellte Nachrichten stehen ebenfalls den anderen Steuergeräten im selben Fahrzeug-Netzwerk zur Verfügung. Die Informationen werden auch über die Schnittstelle gemäß ISO 11992 übermittelt, also auch zwischen den Bremsen-Steuergeräten in Zugfahrzeug und Anhänger. In der nachgeordneten Norm ISO 11992-4 ist der Austausch von Diagnose-Botschaften über die Schnittstelle spezifiziert.

Diagnose-Botschaften auf dem CAN-Bus sind in den Normen ISO 14229 und ISO 15765, insbesondere ISO 15765-3, definiert. Hauptzweck ist der Abruf von Zuständen und Fehlercodes aus Steuergeräten durch an eine OBD-Schnittstelle angeschlossene Diagnosegeräte. Die Diagnose-Botschaften sind weitgehend standardisiert, können aber auch leere Felder aufweisen, die von Fahrzeugherstellern für eigene Zwecke im Zusammenhang mit der Diagnose in Fahrzeugen nutzbar sind. Möglich ist auch die Übergabe von Daten an Steuergeräte.

Aufgabe der vorliegenden Erfindung ist die Schaffung eines Verfahrens zum Aufbau einer drahtlosen Datenverbindung zwischen zwei Fahrzeugen und unter Nutzung einer vorhandenen physischen Datenverbindung. Insbesondere soll ein unkomplizierter, automatisierter geschützter Aufbau der drahtlosen Datenverbindung möglich sein.

Zur Lösung der Aufgabe weist das erfindungsgemäße Verfahren die Merkmale des Anspruchs 1 auf. Insbesondere werden zunächst Verbindungsparameter der drahtlosen Verbindung über die physische Datenverbindung übermittelt. Anschließend wird die drahtlose Verbindung mit den Verbindungsparametern aufgebaut. Als physische Datenverbindung wird jede Art Leitung angesehen, über die Daten übertragbar sind. Insbesondere handelt es sich um eine an internationale Standards angelehnte Datenverbindung. Durch Nutzung der physischen Datenverbindung ist sichergestellt, dass genau die beiden Fahrzeuge miteinander eine drahtlose Verbindung aufbauen, die ohnehin miteinander physisch gekoppelt sind. Als Verbindungsparameter können zur Identifizierung geeignete, eindeutige Merkmale der beteiligten Fahrzeuge und zum Aufbau der Verbindung benötigte Parameter ausgetauscht werden, ebenso weitere Eigenschaften, wie Passwörter, Verschlüsselungsalgorithmen usw.

Die drahtlose Datenverbindung zwischen zwei Fahrzeugen wird hier als einfachste Form eines fahrzeugübergreifenden Netzwerks angesehen. Die drahtlose Datenverbindung ist automatisch herstellbar, etwa durch Abarbeitung von Schritten in geeigneter Software auf den an der Datenverbindung beteiligten Geräten. Vorzugsweise läuft das Verfahren zum Aufbau der drahtlosen Datenverbindung automatisch ab, ohne dass eine Bedienungsperson eingreifen muss. Erforderlich ist nur zuvor die Herstellung der physischen Datenverbindung.

Erfindungsgemäß wird die drahtlose Datenverbindung zwischen einem Zugfahrzeug und einem Anhänger aufgebaut. Möglich ist aber auch die Anwendung des erfindungsgemäßen Verfahrens von Anhänger zu Anhänger.

Vorteilhafterweise handelt es sich bei der physischen Datenverbindung zwischen den beiden Fahrzeugen um eine CAN-Verbindung nach ISO 11992. Diese Art Verbindung bzw. Schnittstelle ist als Datenschnittstelle zwischen Zugfahrzeug und Anhänger weit verbreitet.

Nach einem weiteren Gedanken der Erfindung werden die Verbindungsparameter als Teil einer Diagnose-Botschaft von Unified Diagnostic Services (UDS) nach ISO 14229 und ISO 15765, insbesondere ISO 15765-3, übermittelt. Die physische Datenverbindung nach ISO 11992 kann so für die Zwecke der Erfindung bestmöglich genutzt werden. Der Aufbau einer Funkverbindung wird dadurch vereinfacht bzw. ist automatisiert möglich, insbesondere nach dem Ankoppeln eines Anhängers an ein Zugfahrzeug.

Nach einem weiteren Gedanken der Erfindung ist die drahtlose Datenverbindung zwischen den Fahrzeugen eine WLAN-Verbindung, wobei die Verbindungsparameter für den Aufbau der WLAN-Verbindung vorgesehen sind. Als WLAN-Verbindungen werden vorzugsweise drahtlose Verbindungen gemäß IEEE 802.11 (mit Erweiterungen) angesehen. Wichtige Verbindungsparameter sind die SSID und das Passwort für den Fall einer gesicherten Verbindung.

Nach einem weiteren Gedanken der Erfindung enthalten die Verbindungsparameter wenigstens einen der Parameter SSID, Passwort, Identifizierung wenigstens eines der Fahrzeuge, Netzwerk-Adresse, MAC-Adresse. Auch können die Identifizierungen von am Verbindungsaufbau beteiligten elektronischen Steuergeräten/Kommunikationsgeräten als Parameter übermittelt werden.

Nach einem weiteren Gedanken der Erfindung kann das Verfahren zusätzlich folgende Merkmale aufweisen:
a) in einem ersten Fahrzeug sind ein erstes Kommunikationsgerät und ein erstes Steuergerät vorgesehen, in einem zweiten Fahrzeug ein zweites Kommunikationsgerät und ein zweites Steuergerät,
b) die beiden Kommunikationsgeräte können über die drahtlose Datenverbindung miteinander kommunizieren,
c) das erste Kommunikationsgerät und das erste Steuergerät können über eine Datenverbindung miteinander kommunizieren,
d) das zweite Kommunikationsgerät und das zweite Steuergerät können über eine Datenverbindung miteinander kommunizieren,
e) nach Herstellung der physischen Datenverbindung zwischen dem ersten Steuergerät und dem zweiten Steuergerät sendet das erste Steuergerät über die physische Datenverbindung und das zweite Steuergerät die Verbindungsparameter für die drahtlose Datenverbindung an das zweite Kommunikationsgerät,
f) nach Erhalt der Verbindungsparameter baut das zweite Kommunikationsgerät mit dem ersten Kommunikationsgerät die drahtlose Verbindung auf.

Das erste Steuergerät hat die Verbindungsparameter vom ersten Kommunikationsgerät entweder zeitnah oder schon vorher erhalten. Möglich ist auch eine Übersendung durch das erste Kommunikationsgerät, das erste Steuergerät ist dann nur Vermittler der Nachricht.

Die Kommunikationsgeräte sind ebenfalls Steuergeräte (für Kommunikation) und werden hier nur zum Zweck der besseren Unterscheidung als Kommunikationsgeräte bezeichnet. Möglich ist auch eine Integration von Kommunikationsgerät und Steuergerät in einem Gerät.

Nach einem weiteren Gedanken der Erfindung sind erstes Kommunikationsgerät und erstes Steuergerät über einen CAN-Bus verbunden. Daten werden insbesondere gemäß dem Netzwerkprotokoll SAE J1939 auf dem CAN-Bus übertragen.

Auch das zweite Kommunikationsgerät und das zweite Steuergerät können über einen CAN-Bus verbunden sein.

Gegenstand der Erfindung ist auch ein Steuergerät zur Durchführung des Verfahrens. Vorzugsweise handelt es sich um ein Bremsen-Steuergerät. Das Steuergerät ist derart programmiert bzw. mit einer Software versehen, sodass das Verfahren automatisch abläuft. Angestoßen wird der automatische Ablauf des Verfahrens vorzugsweise durch das Einschalten der elektrischen Anlage im Zugfahrzeug bzw. durch das Einschalten der Zündung. Das Steuergerät des ersten Fahrzeugs (des Zugfahrzeugs) sucht nach Signalen, die auf eine physische Datenverbindung mit einem zweiten Fahrzeug hinweisen. Sobald die physische Datenverbindung zwischen den Fahrzeugen hergestellt wurde, ist eine derartige Information erhältlich.

Das erste Fahrzeug kann dann über die physische Datenverbindung die Verbindungsparameter für die drahtlose Verbindung übermitteln.

Gegenstand der Erfindung ist auch ein Kommunikationsgerät zur Durchführung des Verfahrens. Dieses ist vorzugsweise zumindest ein zum Aufbau einer WLAN-Verbindung geeignetes Steuergerät. Vorzugsweise besteht eine Verbindung über einen CAN-Bus zu einem weiteren Steuergerät.

Weitere Merkmale der Erfindung ergeben sich aus der Beschreibung im Übrigen und aus den Ansprüchen. Vorteilhafte Ausführungsbeispiele der Erfindung werden nachfolgend anhand von Beispielen näher erläutert. Es zeigen:
Fig. 1 eine vereinfachte Darstellung von über einen CAN-Bus miteinander verbundenen Steuergeräten zweier Fahrzeuge,
Fig. 2 eine Abfolge der Verfahrensschritte beim Ankoppeln eines Anhängers an ein Zugfahrzeug und beim Herstellen einer drahtlosen Verbindung,
Fig. 3 eine andere Darstellung für die Abfolge der Verfahrensschritte, mit einer Verbindung zwischen Client und Access Point,
Fig. 4 eine Abfolge der Verfahrensschritte gemäß Fig. 3, jedoch mit dem Ergebnis von zwei Access Points in einem WDS-Netzwerk.

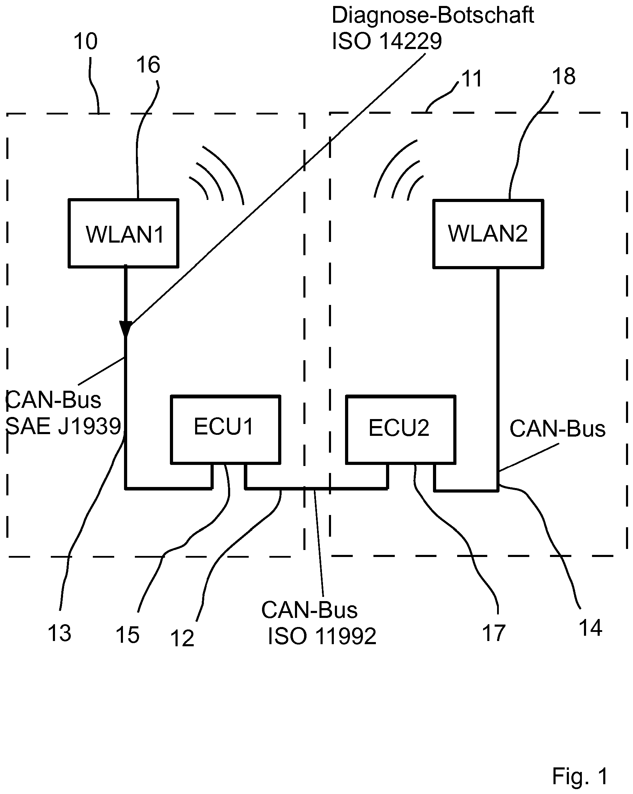

Gemäß Fig. 1 sind ein erstes Fahrzeug 10 und ein zweites Fahrzeug 11 über eine physische Datenverbindung 12 gemäß ISO 11992 miteinander verbunden. In jedem Fahrzeug sind Steuergeräte über einen CAN-Bus 13, 14 miteinander verbunden. Im ersten Fahrzeug 10 ist ein erstes Steuergerät 15 als Bremsen-Steuergerät mit einem ersten Kommunikationsgerät 16 über den CAN-Bus 13 gekoppelt. Das erste Steuergerät 15 ist in Fig. 1 zusätzlich als ECU1 bezeichnet, das erste Kommunikationsgerät als WLAN1.

Analog dazu sind im zweiten Fahrzeug 11 ein zweites Steuergerät 17 (ECU2) und ein zweites Kommunikationsgerät 18 (WLAN2) über den CAN-Bus 14 miteinander gekoppelt.

Die beteiligten Steuergeräte 15 bis 18 kommunizieren über die CAN-Busse 13, 14 miteinander. CAN-Nachrichten eines der Steuergeräte stehen, je nach Adressierung, den anderen Steuergeräten zur Verfügung. Möglich und üblich ist die Nutzung des bekannten Netzwerkprotokolls SAE J1939 für CAN-Nachrichten.

Die einzelnen Steuergeräte können auch Diagnose-Botschaften über die sogenannten Unified Diagnostic Services (UDS) gemäß ISO 14229 und ISO 15765-3 übersenden und lesen. Vorliegend werden derartige Diagnose-Botschaften genutzt für die Übermittlung von Verbindungsparametern zum Aufbau einer drahtlosen Verbindung zwischen den beiden Kommunikationsgeräten 16, 18.

Das erste Fahrzeug 10 ist hier vorzugsweise ein Zugfahrzeug, das zweite Fahrzeug 11 ein Anhänger. Das erste Steuergerät 15 ist das Bremsen-Steuergerät des Zugfahrzeugs, während das zweite Steuergerät 17 das Bremsen-Steuergerät des Anhängers ist. Die beiden Bremsen-Steuergeräte sind in bekannter Weise über die physische Datenverbindung 12 miteinander verbunden und können darüber nach ISO 11992-4 auch Diagnose-Botschaften der UDS austauschen.

Im vorliegenden Beispiel ist eine drahtlose Datenverbindung zwischen den Kommunikationsgeräten 16, 18 per WLAN vorgesehen. Das erste Kommunikationsgerät 16 ist als Access Point konfiguriert und sendet seine SSID. Gleiches gilt für das zweite Kommunikationsgerät 18, welches als Access Point eine eigene SSID aufweist. Ziel ist nun die Herstellung der WLAN-Verbindung zwischen den beiden Kommunikationsgeräten 16, 18. Hierzu übersendet das erste Kommunikationsgerät 16 die eigene SSID, eventuell Angaben zur Verschlüsselung und ein Passwort über den CAN-Bus 13, die physische Datenverbindung 12 und den CAN-Bus 14 an das zweite Kommunikationsgerät 18.

Die angegebenen Verbindungsparameter sind verpackt in eine oder mehrere Diagnose-Botschaften der UDS. Das zweite Kommunikationsgerät 18 kann sich mit den übermittelten Daten mit dem ersten Kommunikationsgerät 16 per WLAN verbinden. Irrtümliche Verbindungen mit weiteren Fahrzeugen, die keine physische Datenverbindung zum ersten Fahrzeug 10 aufweisen, sind ausgeschlossen.

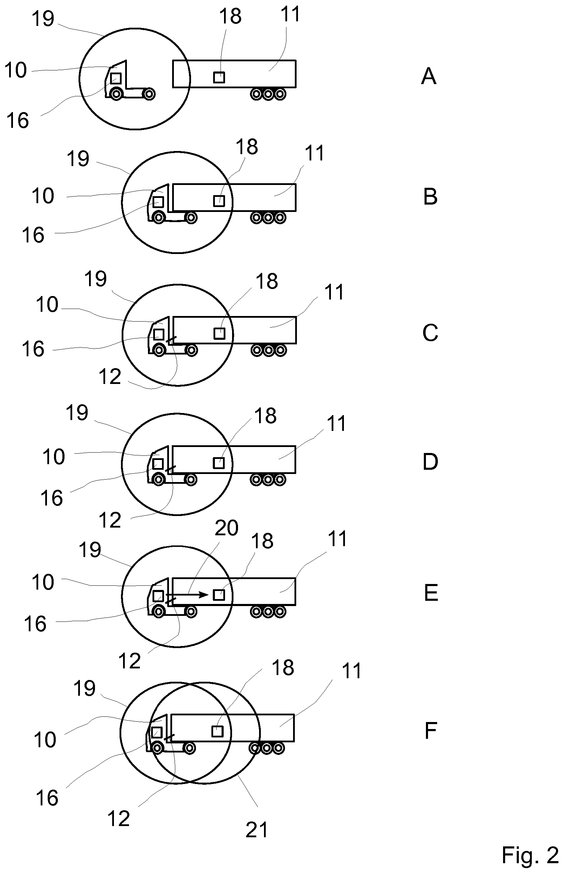

Der Ablauf bei der Herstellung der drahtlosen Datenverbindung zwischen den beiden Fahrzeugen 10, 11 wird in Verbindung mit Fig. 2 erläutert. Gezeigt sind Schritte A bis F:
A: Ein Zugfahrzeug als erstes Fahrzeug 10 und ein Auflieger als zweites Fahrzeug 11 sind noch nicht mechanisch gekoppelt. Das Kommunikationsgerät 16 im Zugfahrzeug sendet per WLAN seine SSID und ist mit dem CAN-Bus 13 des Zugfahrzeugs verbunden. Ebenso ist das Kommunikationsgerät 18 im Anhänger mit dem CAN-Bus 14 des Bremsen-Steuergerätes (Steuergerät 17) verbunden. Die WLAN-Reichweite des Zugfahrzeugs ist durch einen Kreis 19 dargestellt, welcher noch nicht das Kommunikationsgerät 18 im Anhänger erreicht.
B: Der Anhänger wird an das Zugfahrzeug mechanisch angekoppelt. Das zweite Kommunikationsgerät 18 befindet sich nun im Bereich des WLAN (Kreis 19) des Zugfahrzeugs.
C: Zugfahrzeug und Anhänger werden elektrisch und pneumatisch miteinander verbunden. Dabei wird auch die physische Datenverbindung 12 gemäß ISO 11992 hergestellt, welche die Bremsen-Steuergeräte (Steuergeräte 15 und 17) miteinander verbindet. Letztere sind in Fig. 2 aus Platzgründen nicht dargestellt.
D: Das Bremsen-Steuergerät im Anhänger wird durch die Verbindung zum Zugfahrzeug mit Strom versorgt und meldet sich auf dem CAN-Bus 13 als Steuergerät. Das Bremsen-Steuergerät im Zugfahrzeug erkennt anhand der Nachrichten auf dem CAN-Bus, dass ein Anhänger mit Steuergerät angekoppelt wurde und gibt diese Information an das Kommunikationsgerät 16 weiter. Alternativ erkennt das Kommunikationsgerät 16 (welches selbst auch ein Steuergerät ist) selbstständig anhand der auf dem CAN-Bus 13 vorliegenden Nachrichten, dass ein Anhänger mit Steuergerät angekoppelt wurde. Daraufhin oder nach Ablauf einer definierten Zeitspanne erzeugt das Kommunikationsgerät 16 im Zugfahrzeug eine oder mehrere Diagnose-Botschaften 20 mit Informationen für die drahtlose Verbindung, insbesondere die eigene SSID und das Passwort für das WLAN des Zugfahrzeugs.
E: Die generierten Diagnose-Botschaften 20 liegen nun auf dem CAN-Bus 13 des Zugfahrzeugs vor und werden vom Bremsen-Steuergerät über die physische Datenverbindung 12 zum Bremsen-Steuergerät des Anhängers weitergeleitet. Von dort gelangen die Diagnose-Botschaften 20 bzw. die darin enthaltenen Informationen zum Kommunikationsgerät 18 des Anhängers.
F: Nach Erhalt der in den Diagnose-Botschaften 20 enthaltenen Informationen verbindet sich das Kommunikationsgerät 18 des Anhängers mit dem Kommunikationsgerät 16 des Zugfahrzeugs. Dabei baut das Kommunikationsgerät 18 ein WLAN 21 auf, welches auch das Kommunikationsgerät 16 erreicht.

Im Ergebnis ist das Kommunikationsgerät 18 (Anhänger) Client im WLAN des Kommunikationsgerätes 16 (Zugfahrzeug). Alternativ können die beiden Kommunikationsgeräte 16, 18 auch per WDS ein gemeinsames Netzwerk aufspannen, um so die Reichweite eines der beiden WLANs 19, 20 zu vergrößern, oder um ein gemeinsames Netzwerk aufzubauen, sodass sämtliche Informationen, die in einem der beiden WLANs 19, 20 vorliegen, von einem Client außerhalb der beiden Netzwerke abrufbar sind.

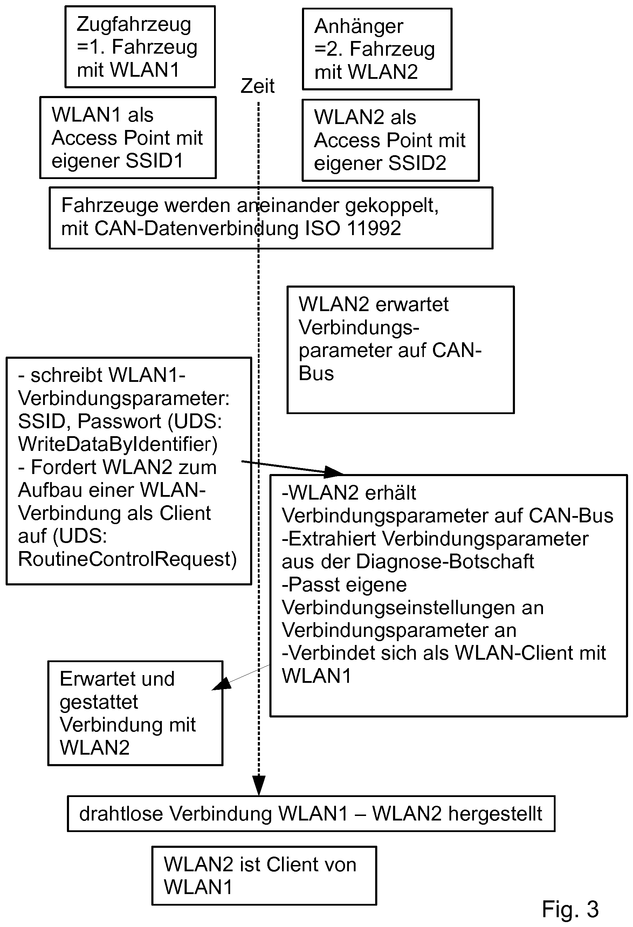

Die einzelnen Schritte beim Aufbau der Client-Access-Point-Verbindung sind in Fig. 3 dargestellt. Erforderlich ist die Übergabe der Verbindungsparameter vom ersten Kommunikationsgerät 16 (WLAN1) des Zugfahrzeugs an das zweite Kommunikationsgerät 18 (WLAN2) im Anhänger. Hierzu werden die Verbindungsparameter, insbesondere SSID und Passwort, in einer UDS-Diagnose-Botschaft verpackt, nämlich als WriteDataByldentifier, und über den CAN-Bus versendet. Zusätzlich fordert das erste Kommunikationsgerät (WLAN1) zum Aufbau einer WLAN-Verbindung auf, wobei das zweite Kommunikationsgerät (WLAN2) Client sein soll. Die entsprechende UDS-Diagnose-Botschaft wird als RoutineControlRequest bezeichnet. Das zweite Kommunikationsgerät 18 (WLAN2) liest die Diagnose-Botschaften, extrahiert die Verbindungsparameter, passt die eigenen Verbindungseinstellungen an und verbindet sich als WLAN-Client mit dem ersten Kommunikationsgerät 16 (WLAN1). Die drahtlose Verbindung besteht zwischen WLAN1 als Access-Point und WLAN2 als Client.

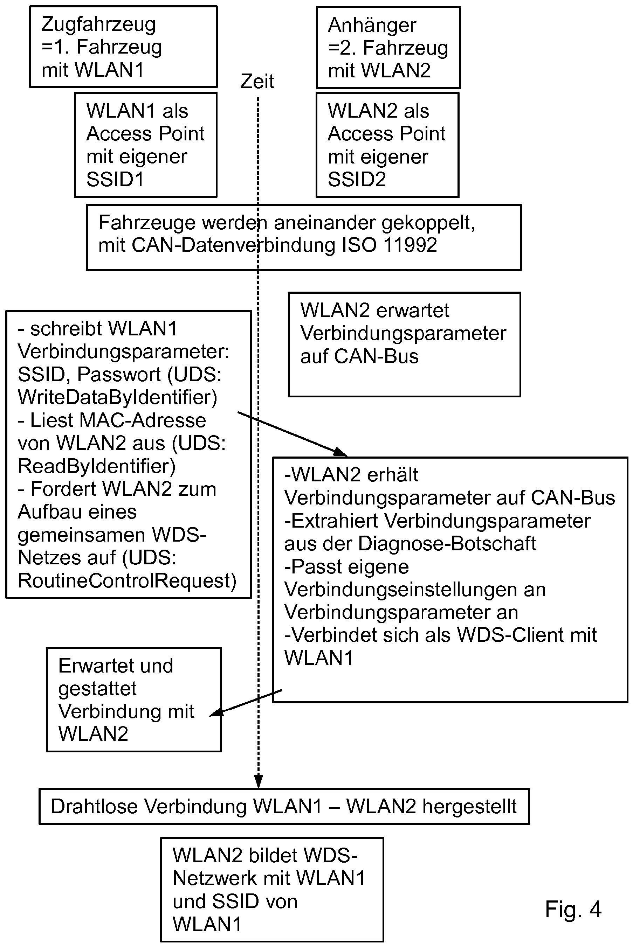

Der Aufbau des WDS-Netzwerks ergibt sich aus Fig. 4 und den darin enthaltenen Angaben. Wiederum erforderlich ist die Übergabe der Verbindungsparameter vom ersten Kommunikationsgerät 16 (WLAN1) des Zugfahrzeugs an das zweite Kommunikationsgerät 18 (WLAN2) im Anhänger. Hierzu werden die Verbindungsparameter, insbesondere SSID und Passwort, als WriteDataByldentifier über den CAN-Bus versendet. Zusätzlich liest WLAN1 die MAC-Adresse von WLAN2 aus. Die zugehörige UDS-Botschaft wird als ReadByldentifier bezeichnet. Außerdem fordert das erste Kommunikationsgerät (WLAN1) zum Aufbau eines gemeinsamen WDS-Netzes auf. Die entsprechende UDS-Diagnose-Botschaft wird wiederum als RoutineControlRequest bezeichnet. Das zweite Kommunikationsgerät 18 (WLAN2) liest die Diagnose-Botschaften, extrahiert die Verbindungsparameter, passt die eigenen Verbindungseinstellungen an und verbindet sich als WDS-Client mit dem ersten Kommunikationsgerät 16 (WLAN1). Daraufhin akzeptiert WLAN1 die Verbindung mit WLAN2 zu einem WDS-Netzwerk.

Im voranstehenden Text, in den Ansprüchen und Figuren sind verschiedene Normen (ISO, IEEE, SAE) genannt. Sofern nicht anders angegeben, sind die am Prioritätstag dieser Anmeldung geltenden Fassungen gemeint, oder folgende Fassungen:
- ISO 11992 --> ISO 11992-1: Interchange of digital information on electrical connections between towing and towed vehicles, Part 1: Physical and Data Link Layer, 2001-11-20.
- ISO 11992-4: Interchange of digital information on electrical connections between towing and towed vehicles, Part 4: Diagnostics, 2003-01-27.
- ISO 14229 UDS, Part 1: Specification and requirements, 2004-10-07.
- ISO 15765 Diagnostics on CAN, Part 1: General information, 2003-04-20.
- ISO 15765-3 Diagnostics on CAN, Part 3: Implementation of diagnostic services, 2003-05-12.
- SAE J1939-11 Physical layer 250K bits twisted shielded pair, 09/2006.
- IEEE 802.11 --> IEEE 802 Part 11: Wireless LAN Medium Access Control (MAC) and Physical Layer (PHY) Specifications, 2012-03-29.

## Patentansprüche

1. Verfahren zum Aufbau einer drahtlosen Datenverbindung zwischen wenigstens zwei Fahrzeugen (10, 11), welche über eine physische Datenverbindung (12) miteinander verbunden sind, wobei nach Anschluss der physischen Datenverbindung zunächst Verbindungsparameter der drahtlosen Verbindung über die physische Datenverbindung (12) von dem Zugfahrzeug (10) zu dem angeschlossenen Anhängerfahrzeug (11) übermittelt werden, wobei die drahtlose Datenverbindung zwischen den Fahrzeugen (10, 11) eine WLAN-Verbindung ist, die wenigstens zwei Fahrzeuge (10, 11) mit je einem WLAN-Kommunikationsmodul (16, 18) ausgestattet sind und die Verbindungsparameter für den Aufbau der WLAN-Verbindung vorgesehen sind und dann die drahtlose Verbindung mit den Verbindungsparametern aufgebaut wird, wobei die physische Datenverbindung (12) eine CAN-Verbindung nach ISO 11992 ist, in der am Prioritätstag dieser Anmeldung geltenden Fassung oder als ISO 11992 mit ISO 11992-1: Interchange of digital information on electrical connections between towing and towed vehicles, Part 1: Physical and Data Link Layer, 2001-11-20, **dadurch gekennzeichnet, dass** die Verbindungsparameter als Teil einer Diagnose-Botschaft in der Form des Unified Diagnostic Services, UDS, nach ISO 14229 und ISO 15765 übermittelt werden, in der am Prioritätstag dieser Anmeldung geltenden Fassung der Normen ISO 14229 und ISO 15765 oder als ISO 14229 UDS, Part 1: Specification and requirements, 2004-10-07, und ISO 15765 Diagnostics on CAN, Part 1: General information, 2003-04-20, wobei das Zugfahrzeug (10) mit einer weiteren Diagnose-Botschaft die MAC-Adresse des WLAN-Kommunikationsgerätes (18) im Anhängerfahrzeug (11) ausliest.

2. Verfahren nach Anspruch 1 oder einem der weiteren voranstehenden Ansprüche, **dadurch gekennzeichnet, dass** die Verbindungsparameter wenigstens einen der Parameter SSID, Passwort, Identifizierung wenigstens eines der Fahrzeuge, Netzwerk-Adresse, MAC-Adresse enthalten.

3. Verfahren nach Anspruch 1 oder einem der weiteren voranstehenden Ansprüche, **gekennzeichnet durch** folgende Merkmale:
a) im ersten Fahrzeug (10) sind ein erstes Kommunikationsgerät (16) und ein erstes Steuergerät (15) vorgesehen, im zweiten Fahrzeug (11) sind ein zweites Kommunikationsgerät (18) und ein zweites Steuergerät (17) vorgesehen,
b) die beiden Kommunikationsgeräte (16, 18) können über die drahtlose Datenverbindung miteinander kommunizieren,
c) das erste Kommunikationsgerät (16) und das erste Steuergerät (15) können über eine erste drahtgebundene Datenverbindung miteinander kommunizieren,
d) das zweite Kommunikationsgerät (18) und das zweite Steuergerät (17) können über eine zweite drahtgebundene Datenverbindung miteinander kommunizieren,
e) nach Herstellung der physischen Datenverbindung (12) zwischen dem ersten Steuergerät (15) und dem zweiten Steuergerät (17) sendet das erste Steuergerät (15) über die physische Datenverbindung (12) und das zweite Steuergerät (17) die Verbindungsparameter für die drahtlose Datenverbindung an das zweite Kommunikationsgerät (18),
f) nach Erhalt der Verbindungsparameter baut das zweite Kommunikationsgerät (18) mit dem ersten Kommunikationsgerät (16) die drahtlose Verbindung auf.

4. Verfahren nach Anspruch 3, **dadurch gekennzeichnet, dass** das erste Kommunikationsgerät (16) und das erste Steuergerät (15) über einen CAN-Bus (13) verbunden sind und Daten insbesondere gemäß dem Netzwerkprotokoll SAE J1939 übertragen werden, mit der am Prioritätstag dieser Anmeldung geltenden Fassung der Norm SAE J1939 oder als SAE J1939-11 Physical layer 250K bits twisted shielded pair, 09/2006.

5. Verfahren nach Anspruch 3 oder 4, **dadurch gekennzeichnet, dass** das zweite Kommunikationsgerät (18) und das zweite Steuergerät (17) über einen CAN-Bus (14) verbunden sind.

6. Steuergerät für ein Zugfahrzeug, **dadurch gekennzeichnet, dass** das Steuergerät zur Durchführung des Verfahrens nach einem der voranstehenden Ansprüche 1 bis 5 angepasst ist.

7. Kommunikationsgerät für ein Zugfahrzeug, **dadurch gekennzeichnet, dass** das Kommunikationsgerät (16) zur Durchführung des Verfahrens nach einem der Ansprüche 1 bis 5 angepasst ist.

## Claims

1. Method for setting up a wireless data connection between at least two vehicles (10, 11) which are connected to one another via a physical data connection (12), where, after the physical data connection has been connected, connection parameters of the wireless connection are first transmitted via the physical data connection (12) from the towing vehicle (10) to the connected trailer (11), the wireless data connection between the vehicles (10, 11) being a WLAN connection, the at least two vehicles (10, 11) each being equipped with a WLAN communication module (16, 18) and the connection parameters being provided for setting up the WLAN connection and then the wireless connection being set up with the connection parameters, the physical data connection (12) being a CAN connection according to ISO 11992, in the version applicable on the priority date of this application or as ISO 11992 with ISO 11992-1: Interchange of digital information on electrical connections between towing and towed vehicles, Part 1: Physical and Data Link Layer, 2001-11-20, **characterized in that** the connection parameters are transmitted as part of a diagnostic message in the form of the Unified Diagnostic Services, UDS, according to ISO 14229 and ISO 15765, in the version of the standards ISO 14229 and ISO 15765 applicable on the priority date of this application or as ISO 14229 UDS, Part 1: Specification and requirements, 2004-10-07, and ISO 15765 Diagnostics on CAN, Part 1: General information, 2003-04-20, the towing vehicle (10) reading out the MAC address of the WLAN communication device (18) in the trailer (11) with a further diagnostic message.

2. Method according to claim 1 or any of the other preceding claims, **characterized in that** the connection parameters contain at least one of the parameters SSID, password, identification of at least one of the vehicles, network address, MAC address.

3. Method according to claim 1 or any of the other preceding claims, **characterized by** following features:
a) a first communication device (16) and a first control device (15) are provided in the first vehicle (10), a second communication device (18) and a second control device (17) are provided in the second vehicle (11),
b) the two communication devices (16,18) can communicate with each other via the wireless data connection,
c) the first communication device (16) and the first control device (15) can communicate with each other via a first wired data connection,
d) the second communication device (18) and the second control device (17) can communicate with each other via a second wired data connection,
e) after the physical data connection (12) has been established between the first control device (15) and the second control device (17), the first control device (15) sends the connection parameters for the wireless data connection to the second communication device (18) via the physical data connection (12) and the second control device (17),
f) after receiving the connection parameters, the second communication device (18) sets up the wireless connection with the first communication device (16).

4. Method according to claim 3, **characterized in that** the first communication device (16) and the first control device (15) are connected via a CAN bus (13) and data are transmitted in particular according to the network protocol SAE J1939, with the version of the SAE J1939 standard applicable on the priority date of this application or as SAE J1939-11 Physical layer 250K bits twisted shielded pair, 09/2006.

5. Method according to claim 3 or 4, **characterized in that** the second communication device (18) and the second control device (17) are connected via a CAN bus (14).

6. Control device for a towing vehicle, **characterized in that** the control device is adapted to carry out the method according to any of the preceding claims 1 to 5.

7. Communication device for a towing vehicle, **characterized in that** the communication device (16) is adapted to carry out the method according to any of claims 1 to 5.

## Revendications

1. Procédé permettant d'établir une connexion de données sans fil entre au moins deux véhicules (10, 11) qui sont connectés l'un à l'autre par l'intermédiaire d'une connexion de données physique (12), dans lequel, après la connexion de la connexion de données physique, des paramètres de connexion de la connexion sans fil sont d'abord transmis par l'intermédiaire de la connexion de données physique (12) du véhicule tracteur (10) au véhicule tracté (11) connecté, dans lequel la connexion de données sans fil entre les véhicules (10, 11) est une connexion WLAN, les au moins deux véhicules (10, 11) sont respectivement équipés d'un module de communication WLAN (16, 18) et les paramètres de connexion sont prévus pour l'établissement de la connexion WLAN puis la connexion sans fil est établie avec les paramètres de connexion, dans lequel la connexion de données physique (12) est une connexion CAN selon la norme ISO 11992, dans la version en vigueur à la date de priorité de la présente demande ou selon la norme ISO 11992 comportant la norme ISO 11992-1 : Interchange of digital information on electrical connections between towing and towed vehicles, Part 1: Physical and Data Link Layer, 2001-11-20,
**caractérisé en ce que** les paramètres de connexion sont transmis en tant que partie d'un message de diagnostic sous la forme des Unified Diagnostic Services, selon les normes ISO 14229 et ISO 15765, dans la version en vigueur des normes ISO 14229 et ISO 15765 à la date de priorité de la présente demande ou selon la norme ISO 14229 UDS, Part 1: Specification and requirements, 2004-10-07, et selon la norme ISO 15765 Diagnostics on CAN, Part 1: General information, 2003-04-20, dans lequel le véhicule tracteur (10) lit avec un autre message de diagnostic l'adresse MAC de l'appareil de communication WLAN (18) dans le véhicule tracté (11).

2. Procédé selon la revendication 1 ou l'une des autres revendications précédentes, **caractérisé en ce que** les paramètres de connexion comprennent au moins l'un des paramètres SSID, mot de passe, identification d'au moins l'un des véhicules, adresse réseau, adresse MAC.

3. Procédé selon la revendication 1 ou l'une des autres revendications précédentes, **caractérisé par** les caractéristiques suivantes :
a) dans le premier véhicule (10) sont prévus un premier appareil de communication (16) et un premier appareil de commande (15), dans le second véhicule (11) sont prévus un second appareil de communication (18) et un second appareil de commande (17),
b) les deux appareils de communication (16, 18) peuvent communiquer entre eux par l'intermédiaire de la connexion de données sans fil,
c) le premier appareil de communication (16) et le premier appareil de commande (15) peuvent communiquer entre eux par l'intermédiaire d'une première connexion de données sur fil,
d) le second appareil de communication (18) et le second appareil de commande (17) peuvent communiquer entre eux par l'intermédiaire d'une seconde connexion de données sur fil,
e) après l'établissement de la connexion de données physique (12) entre le premier appareil de commande (15) et le second appareil de commande (17), le premier appareil de commande (15) envoie les paramètres de connexion pour la connexion de données sans fil au second appareil de communication (18) par l'intermédiaire de la connexion de données physique (12) et du second appareil de commande (17),
f) après la réception des paramètres de connexion, le second appareil de communication (18) établit la connexion sans fil avec le premier appareil de communication (16).

4. Procédé selon la revendication 3, **caractérisé en ce que** le premier appareil de communication (16) et le premier appareil de commande (15) sont connectés par l'intermédiaire d'un bus CAN (13) et des données sont transmises en particulier selon le protocole de réseau SAE J1939, comportant la version en vigueur de la norme SAE J1939 à la date de priorité de la présente demande ou selon la norme SAE J1939-11 Physical layer 250K bits twisted shielded pair, 09/2006.

5. Procédé selon la revendication 3 ou 4, **caractérisé en ce que** le second appareil de communication (18) et le second appareil de commande (17) sont connectés par l'intermédiaire d'un bus CAN (14).

6. Appareil de commande pour un véhicule tracteur, **caractérisé en ce que** l'appareil de commande est adapté pour l'exécution du procédé selon l'une des revendications précédentes 1 à 5.

7. Appareil de communication pour un véhicule tracteur,
**caractérisé en ce que** l'appareil de communication (16) est configuré pour exécuter le procédé selon l'une des revendications 1 à 5.
